# EUROPEAN PATENT APPLICATION

(11) **EP 1 936 124 A1**
(43) Date of publication of application: **25.06.2008**
(21) Application number: 06026085.8
(22) Date of filing: 15.12.2006
(51) Int. Cl.: F01D 25/24, F16B 43/00

(54) **Insulation between turbine casing and supporting element**

(71) Applicant: SIEMENS AKTIENGESELLSCHAFT, 80333 München (DE)
(72) Inventor: Cizek, Petr, 67904 Adamov (CZ); Wikström, Rolf, 61237 Finspong (SE)

(57) **Abstract**

The invention relates to a machine having at least a casing (1), whereby supporting elements (2) are assigned to the casing (1).
In order to reduce thermal flux, preferably at steam turbines respectively from the casing (1) of the turbine to the supporting element (2) at least one thermal isolation element (4;16) is allocated between the casing (1) and the supporting element (2).

## Description

The invention relates to a machine having at least a casing, whereby supporting elements are assigned at least to the casing.

Theses kinds of machines are known for example as turbines like gas turbines, steam turbines or the like. The casing and the supporting elements are made of metallic based material, having a (thermal) dilatation. During operation of the exemplary turbines a temperature fluctuation occurs, what means, for example, that some heat is radiated, whereby some variation of turbine casing temperature occurs. Further, the (thermal) dilatation of the (turbine) casing is generated. This has a negative influence on rotor coupling alignment. This requires large checking calculation and limits the minimal acceptable length of sleeve of coupling.

Today the thermal grow of turbine supports is seen as a natural property of the system. It is calculated res. estimated and then the coupling is adapted on this thermal displacement. Therefore nowadays solution requires a minimal length of the coupling sleeve, which ensures enough flexibility to belt it on the displaced position.

It is an object of the invention to provide an improved machine res. turbine in order to reduce a (thermal) dilatation preferably between the casing of the machine res. turbine to the supporting elements.

This object is solved by at least one isolation element which is allocated between the machine res. its casing and the supporting element. In a preferred embodiment of the invention the isolation element is a thermal isolation element.

Due the inventional allocation of the thermal isolation element preferably between the machine casing res. the turbine casing and the corresponding supporting element, a thermal flux from the hot steam turbine casing exemplarily to legs of the support is reduced. The reduction of this thermal flux causes advantageously, that temperature distribution along the support height is more constant and closer to surrounding temperature. The total dilatation of the support due to the temperature variation therefore is reduced. Further it is provided, that coupling misalignments caused by temperature variation is smaller, and that's why coupling can be aligned nearer to the zero position already in cold condition of the exemplary steam turbine. This means, that alignment in cold condition can be nearer to operation alignment because of minimized displacement.

Usually the casing and the supporting element are connected by a bolted connection. Therefore it is suitable in the sense of the invention, that the isolation element is designed as a plate being allocated between a contact surface of the casing and the correspondent counter contact surface of the supporting element, whereby the plate has a center bore for passing of the bolt shaft.

Because of the fact, that the corresponding components (casing/supporting element) are connected by a relative high force by the bolted connection, in a preferred embodiment the isolation element is made of material being stable in pressure, so that the isolation material withstands the tightening press.

The thermal isolation element is preferably made of material having low heat conductivity.

This low heat conductivity according to the invention is lower than the heat conductivity of normal carbon steal, which normally is used for the support of a bearing pedestal.

The isolation element can be made of a carbon steal of better quality characterized in a thermal conductivity of approximately 35 W/mK which would result in lowering the thermal conductivity by a factor of 1.5. Even better results can be obtained by using stainless steal with a thermal conductivity of approximately 12 W/mK at 100°C. Further improvement can be obtained using concrete (0.9 W/mK), glass composite (0.6 W/mK), fibre glass (0.04 W/mK) or ceramics respectively Al₂O₃ (25 W/mK). The isolator element according to the invention is characterized in a thermal conductivity, which is lower than 50 W/mK and has preferably a thermal conductivity lower than 40 W/mK to obtain a significant improvement of the temperature distribution.

In a preferred embodiment a further isolation element is allocated between the nut and the casing, in order to reduce the thermal flux in this direction, this means from the casing into the nut and later to support. The supporting element in the sense of the invention can be designed for example as a support and/or a bearing pedestal or the like.

The invention also includes a variant of a machine, whereby a bearing housing element is separated from the support element. In this embodiment the bearing housing element is connected direct to the casing of the machine. To avoid heat transfer (thermal flux) from the casing to the bearing housing element an isolation element is allocated between these.

Further advantage embodiments of the invention are disclosed in the dependent claims as well as in the following description of the Figures. It shows
- Fig. 1: a cross view of a bolted connection between a casing and a supporting element having an isolation element, and.

- Fig. 2: a further design of a machine support in a cross view.

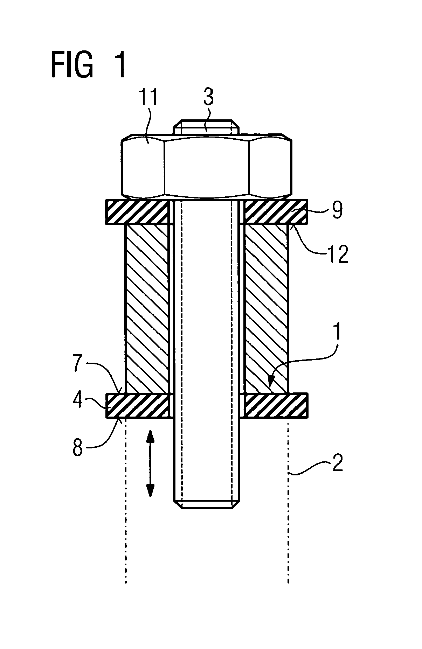

Figure 1 shows a casing 1 of a non depicted machine. The casing 1 is supported on supporting elements 2. The machine can be a turbine like for example a gas turbine or a steam turbine. The supporting element 2 is exemplarily designed as a bearing pedestal, whereby the bearing pedestal is an integral part of the support 2.

The casing 1 and the supporting element 2 are connected by a bolt 3.

At least one isolation element 4 is allocated between the casing 1 and the supporting element 2. The isolation element 4 is designed as a plate, preferably as a ring plate having a center bore for passing the bolt. In the depicted embodiment as shown in Figure 1 the isolation element 4 is allocated between a contact surface 7 of the casing 1 and a corresponding counter contact surface 8 of the supporting element 2. As depicted in the preferred embodiment, a second isolation element 9 is allocated between the nut 11 and the contact surface 12 of the casing 1 to the nut 11. Because of the isolation elements 4 and 9 heat transfer (thermal flux) is avoided from the casing 1 to the support 2.

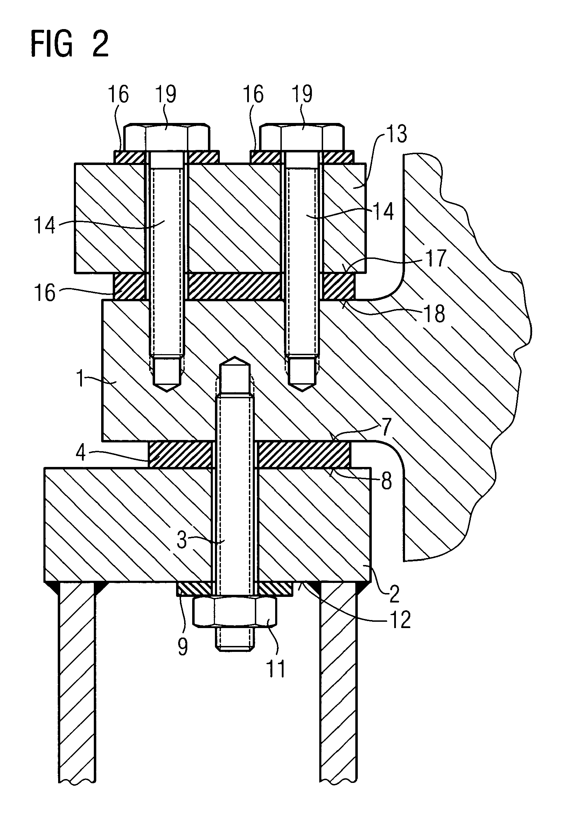

Figure 2 shows a variant of an exemplary machine design. In this embodiment a bearing housing element 13 is separated from the support 2. The bearing housing element 13 is connected direct to the casing 1 by at least one bolt 14. The support 2 is connected to the casing 1 by the bolt 3. The isolation element 4 is allocated between the contact surface 7 and the counter contact surface 8, whereby the second isolation element 9 is allocated between the nut 11 and the contact surface 12. A third isolation element 16 is allocated between a contact surface 17 of the bearing housing element 13 and a counter contact surface 18 of the casing 1. Obviously the second isolation element 9 is allocated to the at least one bolt 14 res. its nut 19. Because of the isolation elements 4, 9 and 16 heat transfer (thermal flux) is avoided from the casing 1 to the bearing housing 13 and from the casing 1 to the support 2.

The isolation elements 4, 9 and 16 are made of a material, which is able to withstand the connecting pressure of the bolts 3 and 14 res. the bolted connections as well as operation stress and turbine weight, whereby a material is preferred having a low heat conductivity, too.

The inventional isolation element is applicable between all connections where a heat flux is possible. Therefore the preferred and described embodiments shall not be limited to these examples.

### List of reference

- 1.: casing
- 2.: supporting element
- 3.: bolt
- 4.: isolation element
- 7.: contact surface
- 8.: counter contact surface
- 9.: second isolating element
- 11.: nut
- 12.: contact surface
- 13.: bearing housing element
- 14.: bolt
- 16.: isolation element
- 17.: contact surface o. 13
- 18.: counter contact surface o. 1
- 19.: nut

## Claims

1. Machine having at least a casing (1), whereby supporting elements (2) are assigned at least to the casing (1) **characterized by**, at least one isolation element (4; 16) which is allocated between the casing (1) and the supporting element (2).

2. Machine according to claim 1, **characterized in, that** the isolation element (4) is designed as a plate.

3. Machine according to claim 1 or 2, **characterized in, that** the isolation element (4) is applied between a contact surface (7) of the casing (1) and a corresponding counter contact surface (8) of the supporting element (2).

4. Machine according to one of the preceding claims, **characterized by** an isolation element (16) allocated between a bearing housing element (13) and the casing (1).

5. Machine according to one of the preceding claims, **characterized in, that** the isolation element (4, 16) is made of a material being stable in pressure having low heat conductivity.

6. Machine according to one of the preceding claims, **characterized in, that** the isolation element (4, 16) is a thermal isolation element.
